# EUROPÄISCHE PATENTSCHRIFT

(11) **EP 2 323 890 B1**
(45) Veröffentlichungstag und Bekanntmachung des Hinweises auf die Patenterteilung: **05.09.2012**
(21) Anmeldenummer: 09737332.8
(22) Anmeldetag: 07.09.2009
(51) Int. Cl.: B62D 15/02, B62D 6/00, B62D 113/00, B62D 117/00, B62D 137/00

(54) **VERFAHREN ZUR LENKUNTERSTÜTZUNG BEI NOTMANÖVER**
METHOD FOR STEERING ASSISTANCE DURING EMERGENCY MANOEUVRES
PROCEDE D'ASSISTANCE A LA DIRECTION EN CAS DE MANOEUVRE D'URGENCE

(30) Priorität: 10.09.2008 DE 102008041981
(43) Veröffentlichungstag der Anmeldung: 25.05.2011
(73) Patentinhaber: Continental Teves AG & Co. OHG, 60488 Frankfurt (DE)
(72) Erfinder: STÄHLIN, Ulrich, 65760 ESCHBORN (DE)
(86) Internationale Anmeldenummer: PCT/DE2009/001246
(87) Internationale Veröffentlichungsnummer: WO 2010/028629

(56) Entgegenhaltungen:
- WO-A1-2008/031662
- DE-A1-102004 008 894

## Beschreibung

Die Erfindung betrifft ein Verfahren zur Lenkunterstützung in Gefahrensituationen gemäß den Merkmalen des unabhängigen Patentanspruchs 1.

Ein solches Verfahren ist aus der DE 10 2004 008 894 A1 bekannt, bei dem mittels einer berechneten optimalen Ausweichtrajektorie in Form eines beaufschlagten Lenkmoments oder in Form eines aufgebrachten Zusatzlenkwinkels auf eine Überlagerungslenkung eines Fahrzeugs ein von einem Fahrer eingeleitetes Ausweichmanöver unterstützt wird, um damit einen Unfall durch Kollision oder Schleudern möglicherweise verhindern zu können. Eine Hindernis, sowie dessen Abmessungen und die Entfernungen zum Hindernis werden mit Hilfe von Umfelderfassungssensoren, bspw. mittels Radar- und/oder Videosensoren erfasst. Bei bestehender Gefahr einer Kollision mit einem Hindernis wird für ein Ausweichfahrmanöver, bspw. für ein Ausweichen nach links als auch für ein Ausweichen nach rechts jeweils eine für die aktuelle Situation optimale Ausweichtrajektorie berechnet und vorgehalten, die eine sichere Vorbeifahrt am Hindernis unter Beachtung der Fahrstabilität ermöglicht.

Als weiterer Stand der Technik ist die WO 2008/031662 A1 zu nennen. Diese offenbart ein Verfahren, zur Vermeidung bzw. Folgeminderung der Kollision eines Fahrzeug mit mindestens einem Objekt, mittels einer Fahrzeugsensorik zur Ermittlung eines aktuellen Fahrzeugzustandes und einer Umfeldsensorik zur Erkennung von Objekten in einem Sensorerfassungsbereich, wobei eine Ausweichtrajektorie zu Kollisionsvermeidung bzw. Kollisionsfolgenminderung auf Basis von Sensordaten bestimmt wird. Des Weiteren wird überprüft, ob der Fahrer eine Vermeidungsreaktion zeigt und eine Fahrzeugzustandsgröße eine Kritikalitätsschwelle überschreitet. Sofern dies der Fall ist, werden Stellsignale zur Einstellung mindestens eines Aktuators im Fahrzeug erzeugt.

Ferner wird im Rahmen einer öffentlich geförderten deutschen Forschungsinitiative deutscher Unternehmen in vierjähriger Forschungsarbeit bis Mitte 2010 u. a. in einem Teilprojekt "Integrative Querführung" eines Projektes Aktive Sicherheit an einer kontinuierlichen, integrierten Querführungs-unterstützung für Spurhaltung, Spurwechsel sowie für das

Durchfahren enger Baustellen entwickelt. Das Fahrzeugumfeld wird durch verschiedene Sensoren erfasst und ausgewertet und in eine entsprechende Spurführung umgesetzt, wobei die Ansteuerung der Lenkung bspw. mit einem elektromechanischen Lenksystem im Fahrzeug erfolgt.

Der Nachteil dieser bekannten Verfahren liegt darin, dass der Fahrer den Eingriff in die Lenkeinrichtung seines Fahrzeugs bemerkt und hierdurch die Akzeptanz eines solchen Verfahrens durch den Fahrer abnimmt oder von ihm sogar abgelehnt wird. Möglicherweise wird der Fahrerwunsch durch diese Systeme sogar überstimmt und damit zusätzlich eine verringerte Akzeptanz erzielt.

Es gibt sehr wohl bereits die sogenannte Drive Steer Recommendation, bei der ein zusätzliches Moment auf das Lenkrad gegeben wird, falls der Fahrer gegenlenken soll, z.B. bei einer µ-Split Bremsung. Der Fahrer muss den Eingriff jedoch selbst ausführen und erhält keine Unterstützung durch das Fahrzeug. Das Lenkmoment dient nur als Hinweis auf die notwendige Aktion.

Schließlich ist es auch bekannt, mit Active Front Steering (Überlagerungslenkung) bereits dynamisch die Lenkübersetzung zu verändern, um so z.B. bei hohen Geschwindigkeiten eine indirektere Übersetzung oder beim Parkieren eine direktere Übersetzung einzustellen.

Bei einem Ausweichmanöver ist die typische Unfallursache, dass der Fahrer das Lenkrad verreist, d.h. zu stark und/oder zu hektisch lenkt. Typischerweise gelingt auch das erste Lenken noch sehr gut, aber das Gegenlenken ist ein Problem und falls der erste Spurwechsel bzw. das erste Ausweichmanöver noch klappt, so ist meistens das Zurücklenken ein Problem (siehe Elchtest bzw. ISO-Doppelspurwechsel).

Es ist Aufgabe der Erfindung, ein Verfahren der eingangs genannten Art anzugeben, das einen Fahrer bei einem Ausweichmanöver unterstützt, insbesondere ein Schleudern während eines Ausweichmanövers, auch beim Zurücklenken weitestgehend verhindert.

Diese Aufgabe wird gelöst durch ein Verfahren mit den Merkmalen des Patentanspruchs 1.

Hiernach ist bei einem solchen Verfahren zur Lenkunterstützung eines Kraftfahrzeugfahrers eines Kraftfahrzeugs in Gefahrensituationen, bei dem das Kraftfahrzeug mit dessen Lenkeinrichtung beeinflussende Mittel sowie mit Fahrzeugumfeld-Erfassungsmittel ausgestattet ist, erfindungsgemäß eine Trajektorien-Berechnungseinheit vorgesehen ist, die auf der Basis der Daten der Fahrzeugumfeld-Erfassungsmittel Fahrfächer aller fahrbaren und stabilen Bewegungstrajektorien berechnet, ferner sind Mittel zur Erfassung und zur Bewertung einer aktuellen Lenkradbetätigung hinsichtlich des Vorliegens einer Gefahrensituation vorgesehen, wobei bei Erkennen einer Gefahrensituation diejenige Bewegungstrajektorie aus dem aktuell bestimmten Fahrfächer bestimmt wird, die dem durch die zugehörige aktuelle Lenkradbetätigung angezeigten Fahrmanöver entspricht und der Fahrer mittels des die Lenkeinrichtung beeinflussenden Mittels zur Weiterführung des Fahrmanövers in Abhängigkeit der bestimmten Bewegungstrajektorie unterstützt wird.

Vorzugsweise können zur Bewertung, ob eine Gefahrensituation vorliegt, zusätzlich auch die Daten der Fahrzeugumfeld-Erfassungsmittel erfasst und bewertet werden

Durch die laufende Berechnung von Fahrfächer stabiler Bewegungstrajektorien kann zu jedem Zeitpunkt das Fahrzeug den Fahrer so unterstützen, dass er sein Manöver mit einer stabilen Trajektorie umsetzen und zu Ende führen kann.

Erfindungsgemäß bestimmt die Trajektorien-Berechnungseinheit für jede berechnete Bewegungstrajektorie den zugehörigen Lenkradwinkel, wobei die Lenkradbetätigung durch Detektieren des Lenkradwinkels oder eines dem Lenkradwinkel entsprechenden Winkels und/oder durch Detektieren der Lenkradwinkelgeschwindigkeit oder einer der Lenkradwinkelgeschwindigkeit entsprechenden Winkelgeschwindigkeit erfasst und ausgewertet wird.

Die Ermittlung eines Lenkradwinkels erfolgt bspw. mittels eines Lenkwinkelsensors, wobei durch Differentiation der Lenkwinkelsignale auch die Lenkwinkelgeschwindigkeit ableitbar ist. Ein dem Lenkradwinkel entsprechender Winkel kann auch aus dem Radwinkel eines lenkbaren Rades abgeleitet werden. Die Detektion einer Gefahrensituation, also bspw. ein durch den Fahrer initiiertes manuelles Ausweichmanöver erfolgt durch gleichzeitige Bewertung der Lenkradwinkels und der Lenkradwinkelgeschwindigkeit, wie dies bspw. aus der DE 10 2004 059 002 A1 bekannt ist. Dabei wird ein manuelles Ausweichmanöver dann identifiziert, wenn die beiden Größen jeweils einen vorbestimmten Schwellwert überschreiten. Dabei kann der eine Schwellwert von dem anderen abhängig sein, so dass bspw. die Form einer Ellipse vorliegt. Zusätzlich können Umfeldinformationen in die Bewertung mit aufgenommen werden, z.B. durch die Erkennung von Objekten im Fahrschlauch des Fahrzeugs oder die Bestimmung der Krümmung der Straße oder die Erkennung von Kurven.

Unter dem Begriff Gefahrensituation wird nicht nur ein Ausweichmanöver wegen einem stehenden oder fahrenden Hindernis verstanden, sondern auch plötzliche Fahrspurwechsel oder eine abrupte Lenkradbetätigung aufgrund einer von dem Fahrer unterschätzten Kurve oder aufgrund eines unbeabsichtigten Abdriftens des Fahrzeugs auf den Fahrbahnrand.

Erfindungsgemäß wird zur Weiterführung des Fahrmanövers der aktuelle Lenkradwinkel als Istwert mit dem der bestimmten Bewegungstrajektorie zugehörigen Lenkradwinkel als Sollwert verglichen, wobei bei einer Ist-Sollwert-Differenz, die größer als eine vorgegebene Regelabweichung ist, der aktuelle Lenkradwinkel mittels eines Zusatzlenkwinkels kompensiert wird und/oder dem Fahrer durch ein auf das Lenkrad aufgebrachtes Gegenmoment der erforderliche Lenkradwinkel vermittelt wird.

Erfindungsgemäß wird bei einem detektierten Ausweichmanöver des Fahrers eine optimierte Ausweichtrajektorie aus dem aktuell bestimmten Fahrfächer zur Vermeidung einer Kollision bestimmtund die vorgegebene Regelabweichung wird durch ein Toleranzband um den der Ausweichtrajektorie zugehörigen Lenkradwinkel als Sollwert bestimmt, wobei bei einem außerhalb dieses Toleranzbandes liegenden aktuellen Lenkradwinkel die vorgegebene Regelabweichung durch die fahrphysikalische Stabilitätsgrenze des Fahrzeugs bestimmt wird.

Es erfolgt eine Unterstützung des Fahrers bei einer drohenden Kollision mit einem Hindernis, indem der aktuelle Lenkradwinkel in einem engen Toleranzband um den notwendigen Lenkradwinkel, also dem Sollwert eingeregelt wird. Sobald jedoch dieses Toleranzband verlassen wird, wird auf eine Unterstützung verzichtet und nur geprüft, ob sich der Lenkradwinkel im physikalisch zulässigen Bereich bewegt um, wenn dieser Bereich verlassen wird, mit der Unterstützung wieder einzusetzen. Damit wird ein äußerst fahrerfreundliches Verfahren erzielt, bei dem nur in engen Grenzen ein Eingriff bzw. eine Unterstützung des Fahrers zugelassen wird, wodurch die Akzeptanz des Systems wesentlich verbessert wird.

Vorzugsweise wird der Übergang von der Regelung auf das Toleranzband zur Regelung auf die fahrphysikalische Stabilität des Fahrzeugs dadurch noch spürbar abgemildert, indem bei Verlassen des Toleranzbandes durch den aktuellen Lenkradwinkel die Regelung des aktuellen Lenkradwinkels auf das Toleranzband über eine vorbestimmte Zeitdauer abgebaut wird.

Zusätzlich oder alternativ ist es auch möglich, dass bei Verlassen des Toleranzbandes durch den aktuellen Lenkradwinkel die Regelung des aktuellen Lenkradwinkels auf das Toleranzband über eine vorbestimmte Zeitdauer aufrechterhalten wird. Damit werden für diese vorbestimmte Zeitdauer solche Werte von Lenkradwinkeln kompensiert, obwohl sie außerhalb des Toleranzbandes liegen.

Um die erforderlichen Daten zur Berechnung der Fahrfächer bereitstellen zu können, umfasst gemäß einer Weiterbildung der Erfindung das Fahrzeugumfeld-Erfassungsmittel Umfeldsensoren und/oder eine elektronisch gespeicherte Straßenkarte, z.B. eines Navigationssystems oder eines elektronischen Horizonts. Vorzugsweise werden mittels der Umfeld-sensoren eine Fahrspurerkennung zur Bestimmung der nutzbaren Straßenbreite und/oder eine Objekterkennung von fahrenden und stehenden Hindernissen und/oder eine Schätzung der Fahrbahnkrümmung durchgeführt.

Schließlich bestehen gemäß einer Weiterbildung der Erfindung die Fahrfächer aus einer Gesamtheit aus fahrphysikalisch möglichen fahrbaren Bewegungstrajektorien. Somit werden die Fahrfächer nicht nur als Straßenverläufen entsprechenden Kurven sondern auch als Ausweichfahrfächer berechnet. Die Unterscheidung, ob eine Kurve oder ein Ausweichmanöver angebracht ist, kann bspw. aus elektronischen Kartendaten eines Navigationssystems oder aus Daten von Umfeldsensoren gewonnen werden, wobei aus diesen Daten der Umfeldsensoren auch die notwendige Ausweichtrajektorie im Falle der Detektion eines Hindernisses berechnet wird.

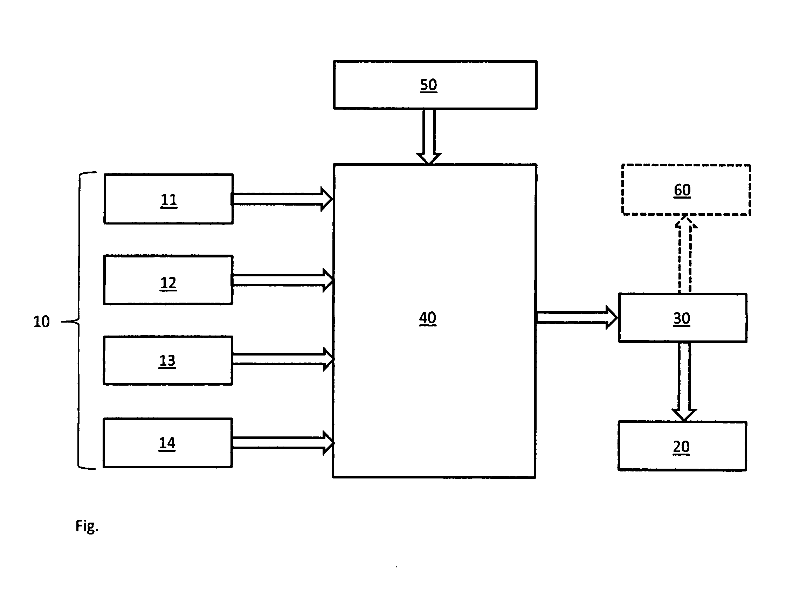

Die Erfindung wird nachfolgend anhand eines Ausführungsbeispiels unter Bezugnahme auf die beigefügte Figur ausführlich beschrieben. Die einzige Figur zeigt ein Blockschaltbild einer Vorrichtung zur Durchführung des erfindungsgemäßen Verfahrens zur Lenkunterstützung eines Fahrers eines Kraftfahrzeugs.

Gemäß dieser Vorrichtung wird in einem Fahrzeugumfeld-Erfassungsmittel 10 zunächst das Umfeld des Kraftfahrzeugs erfasst, das einen Radarsensor 11 und/oder einen Videosensor 12 und/oder einen Sensor 13 zur Erfassung zusätzlicher Daten und Informationen über die befahrene Straße, zum Bsp. im Rahmen einer Fahrspurerkennung zur Bestimmung der nutzbaren Fahrspurbreite, einschließlich der Position des eigenen Fahrzeugs und der Position eines stehenden oder fahrenden Hindernisses und/oder eine digitale Karte 14, bspw. eines Navigationssystems umfasst.

Diese Daten und Informationen der Fahrzeugumfeld-Erfassungsmittel 10 werden in einem Kraftfahrzeugsteuergerät 40 fusioniert und hieraus zu aufeinanderfolgenden Zeitpunkten tₙ Fahrfächer stabiler Bewegungstrajektorien und die dazu gehörigen Lenkradwinkel berechnet.

Fahrfächer sind dabei die Gesamtheit der aus physikalischen Gründen fahrbaren Bewegungstrajektorien. Idealerweise werden die Fahrfächer nicht nur als Kurven berechnet, sondern auch als Ausweichfahrfächer, also die Gesamtheit aller physikalisch machbaren Ausweichmanöver. Die Unterscheidung, ob gerade eine Kurve oder ein Ausweichmanöver angebracht ist, wird aus den Kartendaten der digitalen Karte 14 oder den Informationen der Umfeldsensoren 11, 12 und 13 gewonnen werden. Falls mit diesen Informationen auch stehende oder fahrende Hindernisse detektiert werden, so wird idealerweise auch die notwendige Ausweichtrajektorie berechnet, zusätzlich zu den Ausweichfahrfächern.

Mit einer Lenkwinkelsensoreinheit 50 wird laufend der Lenkradwinkel detektiert und ebenfalls dem Steuergerät 40 zugeführt, das hieraus die zugehörige Lenkwinkelgeschwindigkeit ableitet, falls diese nicht ebenfalls durch die Lenkwinkelsensoreinheit 50 geliefert wird. Diese beiden Größen werden zur Bewertung herangezogen, ob eine Gefahrensituation bzw. ein Notmanöver, bspw. ein Ausweichmanöver durch den Fahrer ausgeführt wird. Hierzu wird der Lenkradwinkel und die Lenkwinkelgeschwindigkeit mit Schwellwerten verglichen und dann eine Gefahrensituation bzw. ein Notmanöver detektiert, wenn diese Schwellwerte überschritten werden. Zusätzlich können die Informationen der Fahrzeugumfeld-Erfassungsmittel 10 für diese Detektion hinzugezogen werden.

Wird in der beschriebenen Weise ein Notmanöver zum Zeitpunkt tₙ erkannt, so unterstützt das Fahrzeug den Fahrer dabei, dieses eingeleitete Manöver mit einer stabilen Bewegungstrajektorie umzusetzen, indem zunächst diejenige Bewegungstrajektorie aus dem zum Zeitpunkt tₙ bestimmten Fahrfächer bestimmt wird, die dem durch die zugehörige aktuelle Lenkradbetätigung angezeigten Fahrmanöver entspricht. Anschließend wird der Fahrer mittels eines die Lenkeinrichtung, hier eine Überlagerungslenkung 20 und/oder eine Hinterachslenkung 60 beeinflussenden Lenkaktors 30 zur Weiterführung des Fahrmanövers in Abhängigkeit der bestimmten Bewegungstrajektorie unterstützt, indem das Steuergerät 40 auf der Basis eines ständigen Soll-Istwert-Vergleich zwischen dem aktuellen Lenkwinkel als Istwert und dem der bestimmten Bewegungstrajektorie zugehörigen Lenkradwinkel als Sollwert prüft, ob eine Ist-Sollwert-Differenz größer als eine vorgegebene Regelabweichung ist, wobei die Regelabweichung durch die fahrphysikalische Stabilitätsgrenze des Fahrzeugs bestimmt ist. Die Bewegungstrajektorie wird aus den fortlaufend zu den Zeitpunkten tₙ₊₁, tₙ₊₂ usw. erzeugten Fahrfächer einschließlich der zugehörigen Lenkradwinkel aktuell auf der Basis der Informationen der Fahrzeugumfeld-Erfassungsmittel 10 bestimmt. Es wird also ständig überprüft, ob sich der von dem Fahrer eingestellte Lenkradwinkel noch in den physikalisch erlaubten Grenzen des Lenkradwinkels bewegt, die aus den Bewegungstrajektorien der fortlaufend erzeugten Fahrfächern abgeleitet werden. Ist das nicht der Fall, so wird der Lenkradwinkel des Fahrers mittels eines Zusatzlenkwinkels durch die Überlagerungslenkung 20 und/oder die Hinterradlenkung 60 kompensiert, so dass der Lenkradwinkel in den physikalischen Grenzen bleibt.

Steht weder eine Überlagerungslenkung 20 noch eine Hinterradlenkung 60 zur Verfügung, so sind Mittel vorhanden, die ein Gegenmoment auf das Lenkrad geben, wodurch dem Fahrer der erforderliche Lenkradwinkel vermittelt wird und damit das Lenkrad nicht über den erlaubten Wert verdrehen kann.

Wird über die Fahrzeugumfeld-Erfassungsmittel 10 ein Hindernis erkannt und steht damit die Information über den idealen Verlauf der Bewegungstrajektorie des gestarteten Ausweichmanövers sowie der zugehörigen Lenkradwinkel zur Verfügung, so wird auf diese Bewegungstrajektorie eingeregelt, solange der Fahrer einen Lenkradwinkel einstellt, der in einem Toleranzband um den dafür notwendigen Lenkradwinkel bleibt. Hierzu wird in dem Steuergerät 40 der von dem Fahrer eingestellte und über die Lenkwinkelsensoreinheit 50 erfasste Lenkradwinkel als Istwert mit dem der Bewegungstrajektorie zugehörigen Lenkradwinkel als Sollwert verglichen. Die Bewegungstrajektorie ist die Ausweichtrajektorie zum Umfahren des detektierten Hindernisses. Ist z.B. ein Lenkradwinkel von 45° notwendig und lenkt der Fahrer aber mit einem Lenkradwinkel von 52°, so wird der Rest durch die Überlagerungslenkung 20 und/oder der Hinterradlenkung 60 mittels des Lenkaktors 30 kompensiert, damit sich der ideale Lenkradwinkel von 45° einstellt. Bewegt sich der Lenkradwinkel außerhalb der Toleranzbandes, so wird wie oben beschrieben nur geprüft, dass er sich in den erlaubten physikalischen Grenzen bewegt. Verlässt der Lenkradwinkel diesen Bereich, erfolgt wieder eine Unterstützung des Fahrers, indem mittels der Überlagerungslenkung 20 und/oder der Hinterachslenkung 60 ein Zusatzlenkwinkel zur Kompensation auf den aktuellen Lenkradwinkel aufgebracht wird.

In dem gerade beschriebenen Fall könnte z.B. der Toleranzbereich bei 54° enden, was dazu führen würde, dass ein Lenkradwinkel von 55° nicht mehr kompensiert, sondern nur auf die physikalische Umsetzbarkeit geprüft würde. Um die Grenze zwischen kompensierten Bereich und unkompensierten Bereich nicht zu schlagartig zu überschreiten, wird bei Verlassen des Toleranzbereichs nicht abrupt die Kompensation weggenommen, sondern über einen Zeitraum T1 abgebaut. Es ist auch vorstellbar, dass Ausreißer aus dem Toleranzbereich für einen Zeitraum T2 toleriert werden, d.h., dass selbst solche Werte kompensiert werden, die eigentlich außerhalb des Toleranzbereichs liegen.

Der Vorteil des vorgeschlagenen Verfahrens liegt in der Unterstützung des Fahrers, im Gegensatz zur Bevormundung oder sogar kompletten Abkopplung. Es ist davon auszugehen, dass ein typischer Fahrer bei einer Gefahrensituation oder einem Notmanöver, wie bspw. einem Ausweichmanöver die Unterstützung nicht bemerkt und stattdessen der Meinung ist, er hätte das Manöver zu 100% ohne die Unterstützung des Fahrzeugs durchgeführt.

Zur Realisierung des erfindungsgemäßen Verfahrens ist keine zusätzliche Hardware notwendig, insbesondere nicht bei modernen Fahrzeugen. Stattdessen wird die Sicherheit bei gleichzeitiger erhöhter Akzeptanz durch den Fahrer verbessert.

## Patentansprüche

1. Verfahren zur Lenkunterstützung eines Kraftfahrzeugfahrers eines Kraftfahrzeugs in Gefahrensituationen, bei dem das Kraftfahrzeug mit dessen Lenkeinrichtung (20, 60) beeinflussende Mittel (30) sowie mit Fahrzeugumfeld-Erfassungsmittel (10) ausgestattet ist,
wobei
- eine Trajektorien-Berechnungseinheit (40) vorgesehen ist, die auf der Basis der Daten der Fahrzeugumfeld-Erfassungsmittel (10) Fahrfächer aller fahrbaren und stabilen Bewegungstrajektorien berechnet,
- Mittel (40, 50) zur Erfassung und zur Bewertung einer aktuellen Lenkradbetätigung hinsichtlich des Vorliegens einer Gefahrensituation vorgesehen sind,
- bei Erkennen einer Gefahrensituation diejenige Bewegungstrajektorie aus dem aktuell bestimmten Fahrfächer bestimmt wird, die dem durch die zugehörige aktuelle Lenkradbetätigung angezeigten Fahrmanöver entspricht,
- der Fahrer mittels des die Lenkeinrichtung (20) beeinflussenden Mittels (30) zur Weiterführung des Fahrmanövers in Abhängigkeit der bestimmten Bewegungstrajektorie unterstützt wird,
- die Trajektorien-Berechnungseinheit (40) für jede berechnete Bewegungstrajektorie den zugehörigen Lenkradwinkel bestimmt,
- die Lenkradbetätigung durch Detektieren des Lenkradwinkels oder eines dem Lenkradwinkel entsprechenden Winkels und/oder durch Detektieren der Lenkradwinkelgeschwindigkeit oder einer der Lenkradwinkelgeschwindigkeit entsprechenden Winkelgeschwindigkeit erfasst und ausgewertet wird,
- zur Weiterführung des Fahrmanövers der aktuelle Lenkradwinkel als Istwert mit dem der bestimmten Bewegungstrajektorie zugehörigen Lenkradwinkel als Sollwert verglichen wird, und
- bei einer Ist-Sollwert-Differenz, die größer als eine vorgegebene Regelabweichung ist, wird der aktuelle Lenkradwinkel mittels eines Zusatzlenkwinkels kompensiert und/oder dem Fahrer durch ein auf das Lenkrad aufgebrachtes Gegenmoment der erforderliche Lenkradwinkel vermittelt,
**dadurch gekennzeichnet, dass**
- bei einem detektierten Ausweichmanöver des Fahrers eine optimierte Ausweichtrajektorie aus dem aktuell bestimmten Fahrfächer zur Vermeidung einer Kollision bestimmt wird,
- die vorgegebene Regelabweichung durch ein Toleranzband um den der Ausweichtrajektorie zugehörigen Lenkradwinkel als Sollwert bestimmt wird, und
- bei einem außerhalb dieses Toleranzbandes liegenden aktuellen Lenkradwinkel die vorgegebene Regelabweichung durch die fahrphysikalische Stabilitätsgrenze des Fahrzeugs bestimmt wird.

2. Verfahren nach Anspruch 1,
**dadurch gekennzeichnet, dass**
bei Überschreiten des Toleranzbandes durch den aktuellen Lenkradwinkel die Regelung des aktuellen Lenkradwinkels auf das Toleranzband über eine vorbestimmte Zeitdauer abgebaut wird.

3. Verfahren nach Anspruch 1 oder 2,
**dadurch gekennzeichnet, dass**
bei Überschreiten des Toleranzbandes durch den aktuellen Lenkradwinkel die Regelung des aktuellen Lenkradwinkels auf das Toleranzband über eine vorbestimmte Zeitdauer aufrechterhalten wird.

4. Verfahren nach einem der vorhergehenden Ansprüche,
**dadurch gekennzeichnet, dass**
die Fahrzeugumfeld-Erfassungsmittel (10) Umfeldsensoren (11, 12, 13) und/oder eine elektronisch gespeicherte Straßenkarte (14) eines Navigationssystems oder eines elektronischen Horizonts umfassen.

5. Verfahren nach Anspruch 3 oder 4,
**dadurch gekennzeichnet, dass**
mittels der Umfeldsensoren (11, 12, 13) eine Fahrspurerkennung zur Bestimmung der nutzbaren Straßenbreite durchgeführt wird.

6. Verfahren nach einem der Ansprüche 3 bis 5,
**dadurch gekennzeichnet, dass**
mittels der Umfeldsensoren (11, 12, 13) eine Objekterkennung von fahrenden und stehenden Hindernissen durchgeführt wird.

7. Verfahren nach einem der vorhergehenden Ansprüche,
**dadurch kennzeichnet,**
**dass** mittels der Fahrzeugumfeld-Erfassungsmittel (10) eine Gefahrensituation detektiert wird.

8. Verfahren nach einem der vorhergehenden Ansprüche,
**dadurch kennzeichnet,**
**dass** die Fahrfächer eine Gesamtheit der aus fahrphysikalisch möglichen fahrbaren Bewegungstrajektorien sind.

9. Verfahren nach einem der vorangehenden Ansprüche,
**dadurch kennzeichnet,**
**dass** als Lenkeinrichtung eine Überlagerungslenkung (20) und/oder eine Hinterachslenkung (60) vorgesehen sind bzw. ist.

## Claims

1. Method for the steering assistance of a motor vehicle driver of a motor vehicle in dangerous situations, in which method the motor vehicle is equipped with means (30) that influence the steering device (20, 60) of the motor vehicle and with vehicle environment detection means (10), wherein
- a trajectory calculation unit (40) is provided that calculates driving fans of all drivable and stable movement trajectories on the basis of the data of the vehicle environment detection means (10),
- means (40, 50) are provided for detecting and for assessing a current steering wheel actuation with regard to the presence of a dangerous situation,
- when a dangerous situation is detected, that movement trajectory which corresponds to the driving maneuver that is indicated by the associated current steering wheel actuation is determined from the currently determined driving fan,
- the driver is assisted, by means of the means (30) that influences the steering device (20), in continuing the driving maneuver as a function of the determined movement trajectory,
- the trajectory calculation unit (40) determines the associated steering wheel angle for each calculated movement trajectory,
- the steering wheel actuation is detected and evaluated by detecting the steering wheel angle or an angle corresponding to the steering wheel angle, and/or by detecting the steering wheel angular velocity or an angular velocity corresponding to the steering wheel angular velocity,
- for continuing the driving maneuver, the current steering wheel angle that represents an actual value is compared with a desired value that is the steering wheel angle associated with the determined movement trajectory, and
- in the case of a difference between the actual value and the desired value that is greater than a predetermined control deviation, the current steering wheel angle is compensated for by means of an additional steering angle and/or the required steering wheel angle is communicated to the driver by means of a counter-torque applied to the steering wheel,
**characterized in that**
- during a detected evasive maneuver of the driver, an optimized evasive trajectory is determined from the currently determined driving fan in order to avoid a collision,
- the predetermined control deviation is determined by a tolerance band around the steering wheel angle associated with the evasive trajectory, which steering wheel angle represents a desired value, and
- in the case of a current steering wheel angle being outside said tolerance band, the predetermined control deviation is determined by a stability limit of the vehicle imposed by the physics of driving.

2. Method according to claim 1,
**characterized in that**
the adjustment of the current steering wheel angle to the tolerance band is reduced over a predetermined period of time if the current steering wheel angle exceeds the tolerance band.

3. Method according to claim 1 or 2,
**characterized in that**
the adjustment of the current steering wheel angle to the tolerance band is maintained over a predetermined period of time if the current steering wheel angle exceeds the tolerance band.

4. Method according to any one of the preceding claims,
**characterized in that**
the vehicle environment detection means (10) comprise environment sensors (11, 12, 13) and/or an electronically stored road map (14) of a navigation system or of an electronic horizon.

5. Method according to claim 3 or 4,
**characterized in that**
a lane detection for determining the usable road width is performed by means of the environment sensors (11, 12, 13).

6. Method according to any one of claims 3 to 5,
**characterized in that**
an object detection of moving and stationary obstacles is performed by means of the environment sensors (11, 12, 13).

7. Method according to any one of the preceding claims,
**characterized in that**
a dangerous situation is detected by means of the vehicle environment detection means (10).

8. Method according to any one of the preceding claims,
**characterized in that**
the driving fans are a totality of all drivable movement trajectories that are possible according to the physics of driving.

9. Method according to any one of the preceding claims,
**characterized in that**
an active front steering system (20) and/or a rear axle steering system (60) is/are provided as a steering device.

## Revendications

1. Procédé pour l'aide à la conduite d'un conducteur d'un véhicule à moteur dans des situations dangereuses, par lequel le véhicule à moteur est équipé avec un moyen (30) influençant son dispositif de direction (20, 60) ainsi que des moyens de détection de l'environnement du véhicule à moteur (10),
- une unité de calcul de trajectoire (40) étant prévue, laquelle calcul des éventails de conduite de toutes les trajectoires de déplacement praticables et stables sur la base des données des moyens de détection de l'environnement du véhicule (10),
- des moyens (40, 50) étant prévus pour la détection et l'analyse d'un actionnement réel du volant, relativement à la présence d'une situation dangereuse,
- lors de la détection d'une situation dangereuse, la trajectoire de déplacement correspondant à la manoeuvre de conduite affichée par l'actionnement réel du volant correspondant étant déterminée à partir de l'éventail de conduite actuellement spécifié,
- le conducteur étant assisté pour la poursuite de la manoeuvre de conduite en fonction de la trajectoire de déplacement spécifique à l'aide du moyen (30) influençant le dispositif de direction (20),
- l'unité de calcul de trajectoires (40) déterminant l'angle du volant correspondant pour chaque trajectoire de déplacement calculée, et
- l'actionnement du volant étant saisi et analysé par la détection de l'angle du volant ou d'un angle correspondant à l'angle du volant et/ou par la détection de la vitesse angulaire du volant ou d'une vitesse angulaire correspondant à la vitesse angulaire du volant,
- pour la poursuite de la manoeuvre de conduite, l'angle du volant actuel étant comparé en tant que valeur réelle avec l'angle du volant correspondant à la trajectoire de déplacement spécifique en tant que valeur prescrite, et
- en cas de différence entre la valeur réelle et la valeur prescrite, laquelle est supérieure à un écart normal spécifié, l'angle du volant réel étant compensé au moyen d'un angle de conduite supplémentaire et/ou l'angle de volant nécessaire étant transmis au conducteur par un moment résistant appliqué au volant,
**caractérisé en ce que**
- lors d'une manoeuvre d'évitement du conducteur détectée, une trajectoire d'évitement optimisée est déterminée à partir de l'éventail de conduite spécifique réel en vue d'empêcher une collision,
- l'écart normal spécifié est défini par une plage de tolérance autour de l'angle de volant correspondant à la trajectoire d'évitement en tant que valeur prescrite, et
- en cas d'un angle de volant actuel se trouvant hors de cette plage de tolérance, l'écart normal spécifié est déterminé par les limites de stabilité de conduite physiques du véhicule.

2. Procédé selon la revendication 1,
**caractérisé en ce que**
lors d'un dépassement de la plage de tolérance par l'angle de volant actuel, la régulation de l'angle de volant actuel à partir de la plage de tolérance est annulée pour une période prédéfinie.

3. Procédé selon la revendication 1 ou 2,
**caractérisé en ce que**
lors d'un dépassement de la plage de tolérance par l'angle de volant actuel, la régulation de l'angle de volant actuel à partir de la plage de tolérance est maintenue pour une période prédéfinie.

4. Procédé selon l'une des revendications précédentes,
**caractérisé en ce que**
les moyens de détection de l'environnement de véhicule (10) comprennent des capteurs d'environnement (11, 12, 13) et/ou une carte routière (14), mémorisée électroniquement, d'un système de navigation ou d'un horizon électronique.

5. Procédé selon la revendication 3 ou 4,
**caractérisé en ce que**
une détection de voie est effectuée au moyen des capteurs d'environnement (11, 12, 13), en vue de déterminer la largeur de chaussée utilisable.

6. Procédé selon l'une des revendications 3 à 5,
**caractérisé en ce que**
une détection d'obstacles roulants et immobiles est effectuée au moyen des capteurs d'environnement (11, 12, 13).

7. Procédé selon l'une des revendications précédentes,
**caractérisé en ce que**,
à l'aide des moyens de détection d'environnement de véhicule (10), une situation dangereuse est détectée.

8. Procédé selon l'une des revendications précédentes,
**caractérisé en ce que**
les éventails de conduites sont la totalité des trajectoires de déplacement praticables possibles physiquement.

9. Procédé selon l'une des revendications précédentes,
**caractérisé en ce que**,
en tant que dispositif de conduite, une direction à superposition (20) et/ou une direction de l'essieu arrière (60) est prévue ou existe.
